# EUROPEAN PATENT APPLICATION

(11) **EP 4 131 095 A1**
(43) Date of publication of application: **08.02.2023**
(21) Application number: 22187544.6
(22) Date of filing: 28.07.2022
(51) Int. Cl.: G06Q 10/00, G06F 21/62, G07C 5/00

(54) **INFORMATION PROCESSING SYSTEM AND INFORMATION PROCESSING METHOD**

(30) Priority: 03.08.2021 JP 2021127800
(71) Applicant: TOYOTA JIDOSHA KABUSHIKI KAISHA, TOYOTA-SHI, AICHI-KEN 471-8571 (JP)
(72) Inventor: NAKASHIMA, Toyokazu, TOYOTA-SHI, AICHI-KEN, 471-8571 (JP); TAKEMOTO, Takeshi, TOYOTA-SHI, AICHI-KEN, 471-8571 (JP); YAMAFUJI, Naoko, TOYOTA-SHI, AICHI-KEN, 471-8571 (JP); OKA, Naoya, TOYOTA-SHI, AICHI-KEN, 471-8571 (JP)
(74) Representative: Cabinet Beau de Loménie

(57) **Abstract**

An information processing system (1) includes an information processing device (10) that records vehicle information of each individual vehicle. The information processing device (10) includes a controller (13) configured to send a first signal for collecting information on buying and selling of a first vehicle in secondary distribution, when the controller (13) detects viewing of vehicle information of the first vehicle.

## Description

### 1. Field of the Invention

The present disclosure relates to information processing systems and information processing methods, and more particularly to an information processing system configured to record and manage various kinds of information of a vehicle, and an information processing method.

### 2. Description of Related Art

There is known a technique related to recording and viewing of vehicle logs (also referred to as "car condition logs") that record information that is useful in assessing a vehicle (automobile). For example, Japanese Unexamined Patent Application Publication No. 2010-009572 (JP 2010-009572 A) describes an information processing system including a log server and one or more terminals. The log server includes a database recording management history of each individual vehicle, and the one or more terminals are connected to the log server via the network. The one or more terminals can read and write data from and to the database. The database includes record item columns for recording vehicle management history of each individual vehicle. The record item columns include a user record item column to which an owner or user of the vehicle can write management history data, and a facility record item column to which a predetermined facility including an auto auction venue can write management history data.

### SUMMARY OF THE INVENTION

There is room for improvement in technique related to use and management of vehicle logs.

The present disclosure provides improvement in technique related to use and management of vehicle logs.

A first aspect of the present disclosure is an information processing system. The information processing system includes an information processing device that records vehicle information of each individual vehicle. The information processing device includes a controller configured to send a first signal for collecting information on buying and selling of a first vehicle in secondary distribution, when the controller detects viewing of vehicle information of the first vehicle.

In the first aspect, the controller may be configured to send a second signal prompting to consent to disclosure of the vehicle information of the first vehicle, when the controller receives the information on buying and selling of the first vehicle in the secondary distribution.

In the first aspect, the controller may be configured to, when a terminal configured to display the vehicle information of the first vehicle is a terminal device of an owner of the first vehicle, send a signal as the first signal to at least one of the terminal device of the owner of the first vehicle and a management terminal device. The signal may be a signal asking whether the first vehicle is going to be sold. The management terminal device may be configured to manage the vehicle information.

In the first aspect, the controller may be configured to, when the controller receives information indicating that the first vehicle is going to be sold, confirm a prospective purchaser of the first vehicle, and send, to the management terminal device, a second signal instructing to obtain consent to disclosure of the vehicle information of the first vehicle from the prospective purchaser.

In the first aspect, the controller may be configured to, when a terminal configured to display the vehicle information of the first vehicle is a terminal device of a general consumer other than an owner of the first vehicle or a terminal device of a used vehicle dealer, send a signal as the first signal to at least one of the terminal device and a management terminal device. The signal may be a signal asking whether the first vehicle is going to be sold. The terminal device may be configured to display the vehicle information. The management terminal device may be configured to manage the vehicle information.

In the first aspect, when the controller receives information indicating that the first vehicle has been sold, the controller may be configured to confirm a current owner of the first vehicle. The controller may be configured to send to the management terminal device a second signal instructing to obtain consent to disclosure of the vehicle information of the first vehicle from the current owner, or send, to the terminal device, a second signal prompting to consent to disclosure of the vehicle information of the first vehicle.

In the first aspect, the controller may be configured to send a signal confirming a current owner of the first vehicle to a communication device of the first vehicle.

In the first aspect, the controller may be configured to send, to a communication device of the first vehicle, a signal prompting to consent to disclosure of the vehicle information on the first vehicle.

In the first aspect, the controller may be configured not to disclose the vehicle information of the first vehicle acquired at or after sale of the first vehicle when the controller receives information indicating that the first vehicle has been sold.

In the first aspect, the information processing system may further include: a terminal device configured to view the vehicle information; and a management terminal device configured to manage the vehicle information. The controller may be configured to send the first signal to at least one of the terminal device and the management terminal device when the terminal device views the vehicle information of the first vehicle in the information processing device. The first signal may be a signal for collecting the information on buying and selling of the first vehicle in the secondary distribution.

In the first aspect, the controller may be configured to send a second signal to at least one of the terminal device and the management terminal device when the information on buying and selling of the first vehicle in the secondary distribution is sent from the terminal device or the management terminal device. The second signal is a signal prompting to consent to disclosure of the vehicle information of the first vehicle.

In the first aspect, the controller may be configured to, when the terminal device is a terminal device of an owner of the first vehicle, send a signal as the first signal to at least one of the terminal device and the management terminal device. The signal may be a signal asking whether the first vehicle is going to be sold.

In the first aspect, when information indicating that the first vehicle is going to be sold is sent from the terminal device or the management terminal device, the controller may be configured to confirm a prospective purchaser of the first vehicle early, and send a second signal to the management terminal device. The second signal may be a signal instructing to obtain consent to disclosure of the vehicle information of the first vehicle from the prospective purchaser.

In the first aspect, the controller may be configured to, send a signal as the first signal to at least one of the terminal device and the management terminal device when the terminal device is a terminal device of a general consumer other than an owner of the first vehicle or a terminal device of a used vehicle dealer. The signal may be a signal asking whether the first vehicle has been sold.

In the first aspect, when information indicating that the first vehicle has been sold is sent from the terminal device or the management terminal device, the controller may be configured to confirm a current owner of the first vehicle early, and send to the management terminal device a second signal instructing to obtain consent to disclosure of the vehicle information of the first vehicle from the current owner, or send to the terminal device a second signal prompting the current owner to consent to disclosure of the vehicle information of the first vehicle.

In the first aspect, the controller may be configured to send a signal confirming a current owner of the first vehicle to a communication device of the first vehicle.

In the first aspect, the controller may be configured not to disclose the vehicle information of the first vehicle acquired at or after sale of the first vehicle when the controller receives information indicating that the first vehicle has been sold.

A second aspect of the present disclosure is an information processing method for providing vehicle information. The information processing method includes: receiving a request to view vehicle information of a first vehicle; sending the vehicle information of the first vehicle; and sending a first signal for collecting information on buying and selling of the first vehicle in secondary distribution.

In the second aspect, the information processing method may further include sending a second signal prompting to consent to disclosure of the vehicle information of the first vehicle, when the information on buying and selling of the first vehicle in the secondary distribution is received.

In the second aspect, the information processing method may further include stopping disclosure of the vehicle information of the first vehicle acquired at or after sale of the first vehicle, when information indicating that the first vehicle has been sold is received.

According to the first and second aspects of the present disclosure, it is possible to improve the technique for using and managing vehicle logs.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a schematic configuration of a system according to an embodiment of the present disclosure;
FIG. 2 is a block diagram showing a schematic configuration of an information processing device according to the embodiment of the present disclosure;
FIG. 3 is a block diagram showing a schematic configuration of a terminal device;
FIG. 4 is a block diagram showing a schematic configuration of a communication device of a vehicle; and
FIG. 5 is a flowchart showing an example of a process that is performed by the information processing device according to the embodiment.

### DETAILED DESCRIPTION OF EMBODIMENTS

An embodiment of the present disclosure will be described below.

### Overview of Embodiment

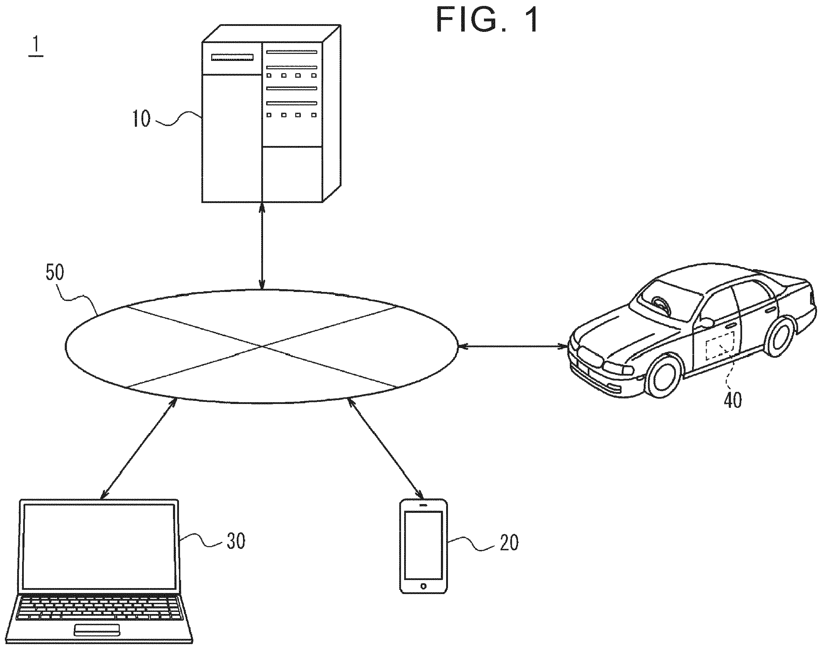

FIG. 1 shows a schematic configuration of a system 1 according to an embodiment of the present disclosure. The system 1 includes an information processing device 10, a terminal device 20 such as a user's smartphone (or tablet, computer), and a management terminal device (computer) 30 of a system management department (vehicle log management department). The system 1 may further include communication devices 40 of a plurality of vehicles. The information processing device 10, the terminal device 20, the management terminal device 30, and the communication device 40 of the vehicle are communicably connected to a network 50 including, for example, the Internet and a mobile communication network.

The information processing device 10 is a computer such as a server device. The information processing device 10 records vehicle logs of a large number of vehicles, that is, vehicle information of each individual vehicle. The information processing device 10 can send the vehicle information or other signals to the terminal device 20 or the management terminal device 30 via the network 50. The information processing device 10 is managed by, for example, a company that runs the system 1 that provides vehicle information.

The terminal device 20 is a terminal device 20 of a user of the system 1, and includes, for example, a smartphone, tablet, or computer owned by an individual user. The terminal device 20 may be a computer of, for example, a used vehicle dealer that uses vehicle logs. The terminal device 20 can access the vehicle logs recorded in the information processing device 10 via the network 50 to view the vehicle information.

The management terminal device 30 is a computer installed in the system management department (vehicle log management department), that is, a computer installed in, for example, the company that runs the system 1. The company that runs the system 1 may be a company that sells vehicles managed by the system 1 or an office of that company (including an affiliated dealership). The management terminal device 30 includes a smartphone, tablet, or computer owned by an employee of the company that runs the system 1. The management terminal device 30 can receive signals from the information processing device 10 via the network 50, and can access the information processing device 10 via the network 50 to manage records, disclosure, etc. of the vehicle logs (vehicle information).

The communication device 40 is a communication device 40 attached to the vehicle, and can send and receive signals to and from the information processing device 10 via the network 50. The vehicle with the communication device 40 is, for example, an automobile, but is not limited to this, and may be any desired vehicle. Examples of automobiles include, but are not limited to, a gasoline-powered vehicle, a battery electric vehicle (BEV), a hybrid electric vehicle (HEV), a plug-in hybrid electric vehicle (PHEV), and a fuel cell electric vehicle (FCEV). The number of vehicles included in the system 1 may be determined as desired.

In the present embodiment, the communication device 40 of the vehicle includes a communication module such as Data Communication Module (DCM), and has a function to collect and send information on the condition and running of the vehicle. The information sent from the vehicle is transmitted to the information processing device 10 and recorded in the information processing device 10 as a part of the vehicle information of the vehicle log. The information sent from the vehicle may be directly stored in the vehicle log of the information processing device 10 as it is. Alternatively, the information sent from the DCM of the vehicle may first be analyzed and processed by the information processing device 10 or another information processing device, and then recorded in the information processing device 10 as the vehicle information of the vehicle log.

First, the overview of the present embodiment will be described, and details of the present embodiment will be given later. When the information processing device 10 detects the user etc. viewing vehicle information of a first vehicle, the information processing device 10 generates and sends a first signal to the terminal device 20 of the user, the management terminal device 30 of the system management department, or the communication device 40 of the first vehicle. The first signal is a signal for collecting information on buying and selling of the first vehicle in secondary distribution (buying and selling of the first vehicle as a used vehicle). The information processing device 10 thus actively collects information on buying and selling of the first vehicle in the secondary distribution. When the information processing device 10 receives the information on buying and selling of the first vehicle in the secondary distribution, the information processing device 10 sends a second signal in order to obtain consent to disclosure of vehicle information from a new owner of the first vehicle. The second signal serves as a trigger to prompt the new owner of the first vehicle to consent to disclosure of the vehicle information.

As described above, according to the present embodiment, when the vehicle information of the first vehicle is viewed, the first signal for collecting information on buying and selling of the first vehicle in the secondary distribution is sent from the information processing device 10. The information processing device 10 and its administrator can thus obtain information on buying and selling of the first vehicle in the secondary distribution early. When buying and selling of the first vehicle in the secondary distribution is confirmed, the second signal for obtaining consent to disclosure of vehicle information from the new owner of the first vehicle is sent from the information processing device 10. Therefore, even when the owner of the vehicle is changed, consent to disclosure of vehicle information can be promptly obtained from the new owner. The technique for use and management of vehicle logs is improved in this regard.

Next, the configurations of the system 1 will be described in detail.

### Configuration of Information Processing Device

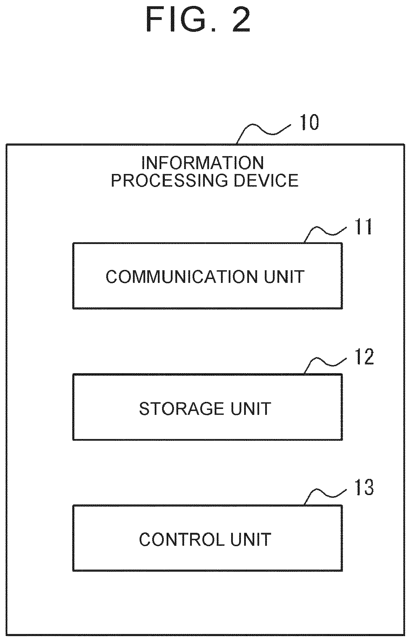

FIG. 2 is a block diagram showing a schematic configuration of the information processing device 10 according to the embodiment of the present disclosure. The information processing device 10 includes a communication unit 11, a storage unit 12, and a control unit 13.

The communication unit 11 includes one or more communication interfaces connected to the network 50. The communication interface is compatible with, for example, a mobile communication standard, a wired local area network (LAN) standard, or a wireless LAN standard. However, the standard with which the communication interface is compatible is not limited to these, and the communication interface may be compatible with any communication standard. In the present embodiment, the information processing device 10 communicates with the terminal device 20, the management terminal device 30, and the communication device 40 of the vehicle via the communication unit 11 and the network 50.

The storage unit 12 includes one or more memories. Examples of the memory include, but not limited to, a semiconductor memory, a magnetic memory, and an optical memory. Each memory included in the storage unit 12 may function as, for example, a main storage device, an auxiliary storage device, or a cache memory. Vehicle information of each of the vehicles is stored in the storage unit 12 as vehicle logs. The vehicle information recorded as the vehicle logs will be described in detail later. Information on whether consent to disclosure has been obtained is recorded for each vehicle of the vehicle logs in the storage unit 12. User information including identification information (user identification (ID) or terminal ID) of each user who uses the system 1 and attributes of each user (e.g., general consumer, vehicle owner, or used vehicle dealer) may be stored as, for example, a user attribute file. The storage unit 12 stores desired information to be used for the operation of the information processing device 10. For example, the storage unit 12 may store a system program, an application program, and a database. The information stored in the storage unit 12 may be updatable with, for example, information acquired from the network 50 via the communication unit 11. The vehicle information stored in the storage unit 12 is sent to the terminal device 20 or the management terminal device 30 from, for example, the communication unit 11 via the network 50.

The control unit 13 includes one or more processors, one or more programmable circuits, one or more dedicated circuits, or a combination thereof. The processor is, for example, a general-purpose processor such as central processing unit (CPU) or graphics processing unit (GPU), or a dedicated processor specialized for a specific process, but is not limited to these processors. The programmable circuit is, for example, a field-programmable gate array (FPGA), but is not limited to this. The dedicated circuit is, for example, an application specific integrated circuit (ASIC), but is not limited to this. The control unit 13 controls the overall operation of the information processing device 10. The control unit 13 provides the vehicle information requested by the user in response to the user's access to view the vehicle information. When providing the vehicle information, the control unit 13 may change the content of the vehicle information to be displayed, according to the attributes of the user. In the present embodiment, when the control unit 13 detects viewing of the vehicle information of the first vehicle, the control unit 13 generates and sends the first signal for collecting information on buying and selling of the first vehicle in the secondary distribution. When the control unit 13 receives the information on buying and selling of the first vehicle in the secondary distribution, the control unit 13 performs control to generate and send the second signal in order to obtain consent to disclosure of the vehicle information from a new owner of the first vehicle. The second signal serves as a trigger to prompt the new owner of the first vehicle to consent to disclosure of the vehicle information.

### Configuration of Terminal Device

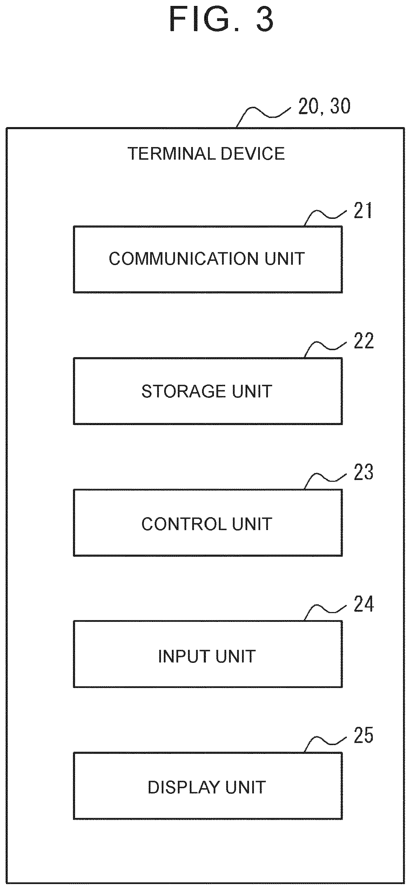

As shown in FIG. 3, the terminal device 20 includes a communication unit 21, a storage unit 22, a control unit 23, an input unit 24, and a display unit 25. The terminal device 20 can be in various forms such as smartphone, tablet, and computer, but generally has a configuration shown in FIG. 3.

The communication unit 21 includes one or more communication interfaces connected to the network 50. The communication interface is compatible with, for example, but not limited to, a mobile communication standard such as 4th generation (4G) or 5th generation (5G). The communication interface is compatible with, for example, a wired local area network (LAN) standard or a wireless LAN standard. However, the standard with which the communication interface is compatible is not limited to these, and the communication interface may be compatible with any communication standard. In the present embodiment, the terminal device 20 communicates with the information processing device 10 via the communication unit 21 and the network 50.

The storage unit 22 includes one or more memories. Each memory included in the storage unit 22 may function as, for example, a main storage device, an auxiliary storage device, or a cache memory. The storage unit 22 stores desired information to be used for the operation of the terminal device 20. For example, the storage unit 22 may store a system program, an application program, and a database. The information stored in the storage unit 22 may be updatable with, for example, information acquired from the network 50 via the communication unit 21. The storage unit 22 can store identification information of the terminal device 20 (terminal ID) or identification information (user ID) of the user who uses the terminal device 20.

The control unit 23 includes one or more processors, one or more programmable circuits, one or more dedicated circuits, or a combination thereof. The control unit 23 controls the overall operation of the terminal device 20. In the present embodiment, the control unit 23 accesses the information processing device 10 via the communication unit 21, and controls, for example, display of the vehicle information sent from the information processing device 10.

The input unit 24 is a device that can be operated by the user to enter desired characters, information, etc. The input unit 24 includes, for example, one or more input devices such as keyboard, mouse, and touch panel. The input unit 24 may be a device having a voice input function. The user can enter, for example, his or her identification information (user ID), a search condition for the vehicle logs, etc. via the input unit 24. The user can respond to signals from the information processing device 10 via the input unit 24.

The display unit 25 is a display device capable of displaying characters, images, etc. The display unit 25 includes one or more display screens such as liquid crystal display and electroluminescence (EL) display. In the present embodiment, the display unit 25 can display the vehicle information sent from the information processing device 10 in a predetermined format. The display unit 25 can also display signals (communication texts) sent from the information processing device 10.

### Configuration of Management Terminal Device

The configuration of the management terminal device 30 is basically the same as that of the terminal device 20. As shown in FIG. 3, the management terminal device 30 may include a communication unit 21, a storage unit 22, a control unit 23, an input unit 24, and a display unit 25. The management terminal device 30 is mainly a computer installed in the company that runs and manages the system 1 or an office of the company, but may be in the form of a smartphone, a tablet, etc.

Since the configurations and functions of the communication unit 21, the storage unit 22, the control unit 23, the input unit 24, and the display unit 25 are basically the same as the configurations and functions of these units in the terminal device 20, description thereof will be omitted. In the management terminal device 30 as well, the display unit 25 can display the vehicle information and signals sent from the information processing device 10, and the user can respond to signals from the information processing device 10 via the input unit 24. For example, the management terminal device 30 can receive from the information processing device 10 the first signal for collecting information on buying and selling of the first vehicle in the secondary distribution, and can send the information on buying and selling of the first vehicle in the secondary distribution to the information processing device 10. The management terminal device 30 can receive from the information processing device 10 the second signal that prompts to consent to disclosure of the vehicle information of the first vehicle. The management terminal device 30 can access the information processing device 10, for example, to correct the vehicle logs (vehicle information) stored in the information processing device 10 and to manage whether the vehicle information can be provided based on permissions from vehicle owners.

### Configuration of Communication Device of Vehicle

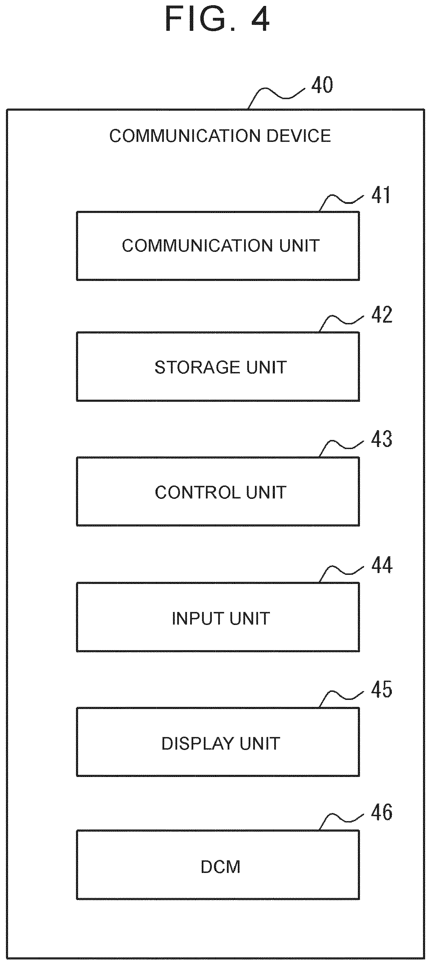

As shown in FIG. 4, the communication device 40 mounted on the vehicle includes a communication unit 41, a storage unit 42, a control unit 43, an input unit 44, a display unit 45, and a Data Communication Module (DCM) 46. The configurations and functions of the communication unit 41, the storage unit 42, the control unit 43, the input unit 44, and the display unit 45 have much in common with the configurations and functions of the communication unit 21, the storage unit 22, the control unit 23, the input unit 24, and the display unit 25 of the terminal device 20. Therefore, the configurations and functions of the communication unit 41, the storage unit 42, the control unit 43, the input unit 44, and the display unit 45 will be described only briefly.

The communication unit 41 includes one or more communication interfaces connected to the network 50. The communication interface is compatible with a wired LAN standard or a wireless LAN standard. However, the standard with which the communication interface is compatible is not limited to these, and the communication interface may be compatible with any communication standard. In the present embodiment, the communication device 40 communicates with the information processing device 10 via the communication unit 41 and the network 50. For example, the vehicle can send information on the condition and running of the vehicle via the communication unit 41.

The storage unit 42 includes one or more memories. The storage unit 42 stores desired information to be used for the operation of the communication device 40. For example, the storage unit 42 may store a system program, an application program, and a database.

The control unit 43 includes one or more processors, one or more programmable circuits, one or more dedicated circuits, or a combination thereof. The control unit 43 controls the overall operation of the communication device 40. In the present embodiment, the control unit 43 controls, for example, transmission of information on the vehicle to the information processing device 10, and display of signals sent from the information processing device 10.

The input unit 44 is a device that can be operated by the owner or user of the vehicle to enter desired characters, information, etc. For example, the user can enter a response to a signal from the information processing device 10 via the input unit 44.

The display unit 45 is a display device capable of displaying characters, images, etc. The display unit 45 includes one or more display screens such as liquid crystal display and electroluminescence (EL) display. In the present embodiment, the display unit 45 displays signals (e.g., communication texts) sent from the information processing device 10. For example, the display unit 45 can display a signal (message) from the information processing device 10 that confirms the current owner of the vehicle, or a signal (message) from the information processing device 10 that prompts to consent to disclosure of the vehicle information of the vehicle.

The DCM 46 is a module having a function to collect information on the condition and running of the vehicle. The information on the condition and running of the vehicle is processed as necessary into a part of the vehicle information in the vehicle log. The DCM 46 sends the collected information on the vehicle to the information processing device 10 via the communication unit 41 or by communication means specific to the DCM 46.

### Vehicle Log

In the present disclosure, the vehicle log (car condition log) may include all the information related to the value and evaluation of the vehicle (automobile), such as the usage status of the vehicle after sale and repair and service records of the vehicle, in addition to basic information of the vehicle such as model and type. The vehicle log can be used as evaluation data that determines the selling price of the vehicle when, for example, selling the vehicle as a used vehicle. The second owner who wants to purchase a used vehicle can be aware of the condition, performance, maintenance history, etc. of the vehicle from the vehicle log before purchasing the vehicle, and can therefore purchase a used vehicle with peace of mind.

Acquisition of the vehicle information recorded as the vehicle log and disclosure of the vehicle information require consent of the vehicle owner. For example, the information on the condition and running of the vehicle can be acquired and sent by a communication device such as DCM mounted on the vehicle, and can be received and recorded by the information processing device 10. Accordingly, for example, consent for acquisition of the vehicle information can be obtained from the purchaser at the time of selling a vehicle with the DCM 46 mounted thereon. In order to protect personal information, disclosure of the vehicle information (issuing, provision, viewing, etc. of the information) can be made only for vehicles with the consent of their owners. Therefore, in order to disclose the vehicle information, the consent of the owner is required in addition to acquisition of the vehicle information.

The vehicle information recorded or disclosed as the vehicle log can be classified into, for example, the following categories: basic information, important matters, usage status, and connected data performance diagnostic information. However, these categories are shown by way of example only, and the vehicle information may be sorted out and recorded by other categories.

The "basic information" includes, for example, vehicle name, grade, body color, chassis number, model, year, first registration date, and manufacturing date. The "important matters" records the presence or absence of, for example, odometer replacement, possibility of odometer rollback, turning on of warning lights, detection of diagnostic trouble codes (DTCs), detection of impact equal to or larger than a reference level, and outstanding recalls. The "usage status" includes a fuel economy value based on the past driving history, average number of driving days, average mileage, and number of trips in coastal areas and heavy snowfall areas. The "connected data performance diagnostic information" records the presence or absence of data indicating an abnormality of the engine, transmission, motor system, undercarriage, brake pressure, battery, etc. The vehicle information may further include records of regular services at a dealership, engine oil change history, etc.

In the present disclosure, the vehicle information includes information on the status and running of the vehicle sent from the vehicle or information obtained by processing this information.

As described above, disclosure of the vehicle information (issuing, provision, viewing, etc. of the information) can be made only for vehicles with the consent of their owners in order to protect personal information. Therefore, in order to effectively use the vehicle logs (vehicle information), it is desirable to obtain the consent from the owners of all the vehicles whose information has been accumulated. When the owner of the vehicle is changed, consent to disclosure of vehicle information of the new owner is required. However, if a vehicle is bought or sold (vehicle owner is changed due to purchase or sale) without the knowledge of the system management department for the vehicle logs, consent to disclosure of the vehicle information cannot be obtained from the new owner of the vehicle. The present disclosure focuses on association between viewing of a vehicle log (vehicle information) and buying and selling of a vehicle in secondary distribution, and uses viewing of the vehicle information of a vehicle as a trigger to find out whether the vehicle is going to be sold.

The following assumptions are made in the present disclosure.
- When a general consumer user (in this case, the owner of the vehicle) views vehicle information of the vehicle he or she owns, it is often for the user to estimate the assessed value of the vehicle he or she owns. That is, it is very likely that this vehicle is going to be sold in the secondary distribution before long.
- When a general consumer user views vehicle information of a vehicle with other registered owner, it is very likely that the owner of this vehicle has already been changed (e.g., the owner of this vehicle has been changed to the user who has viewed the vehicle information or a used vehicle dealer).
- When a user who is a used vehicle dealer views vehicle information of a vehicle with a registered owner, it is very likely that this vehicle has already been sold to the used vehicle dealer or is going to be sold to the used vehicle dealer soon.
- When the system management department (including an affiliated dealership that sold the vehicle) views vehicle information of a vehicle with a registered owner, it is often for regular services etc. of the vehicle and has nothing to do with buying and selling.
- When a general consumer user views vehicle information of a vehicle managed or owned by a used vehicle dealer, it is very likely that the general consumer user is considering buying (purchasing) the vehicle.

### Processing Flow of Information Processing Device

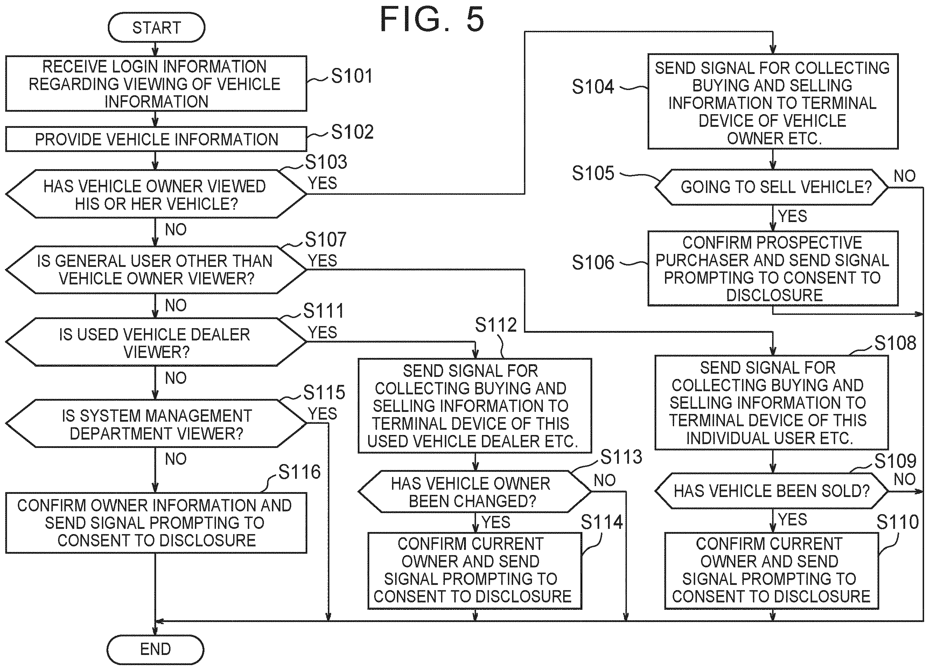

FIG. 5 is a flowchart showing an example of a process (information processing method) that is performed by the information processing device 10 according to the embodiment. The operation of the information processing device 10 according to the present embodiment will be described in more detail with reference to FIG. 5. FIG. 5 shows the process that is performed by the information processing device 10 mainly when a vehicle log of a vehicle (first vehicle) with a registered owner has been accessed and viewed.

Step S101: The information processing device 10 receives via the communication unit 11 login information regarding the viewing of the vehicle log (vehicle information) of the first vehicle sent from the terminal device 20. The login information includes identification information of the user (user ID) or identification information of the terminal device 20 (terminal ID). Therefore, the information processing device 10 can acquire the information identifying the user (user ID or terminal ID) from the login information. The control unit 13 of the information processing device 10 determines based on the acquired user ID or terminal ID whether the user is an authorized user who has been granted access to the system 1, and also determines attributes of the user (e.g., general consumer, vehicle owner, or used vehicle dealer) by using the user attribute file.

Step S102: The control unit 13 of the information processing device 10 extracts requested vehicle information from the storage unit 12 and provides (sends) the extracted vehicle information to the terminal device 20 via the communication unit 11. The content of the vehicle information to be displayed may be changed (added or deleted) according to the attributes of the user.

Step S103: The control unit 13 determines based on information such as the attributes of the user etc. whether the user who has viewed the vehicle log has viewed the vehicle information of the vehicle he or she owns. Namely, the control unit 13 determines whether the terminal used to view the vehicle information of the first vehicle is the terminal device 20 of the owner of the first vehicle. When the user has viewed the vehicle information of the vehicle he or she owns, the routine proceeds to step S104. Otherwise, the routine proceeds to step S107.

Step S104: The control unit 13 sends the first signal for collecting information on buying and selling of the first vehicle in the secondary distribution to the terminal device 20 used to view the vehicle information of the first vehicle (in this example, the terminal device 20 of the owner of the first vehicle) and/or the management terminal device 30. Specifically, the control unit 13 sends a signal (message, etc.) asking "whether the owner is going to sell the first vehicle" to the terminal device 20 of the owner of the first vehicle. The control unit 13 also sends to the management terminal device 30 a signal telling that the owner has viewed the vehicle information of the first vehicle. This signal serves as a trigger for the system administrator to collect information on whether the vehicle has been sold or is going to be sold.

Step S105: The control unit 13 then waits for a response to be input from the owner's terminal device 20 or waits to receive information on the first vehicle from the management terminal device 30, and determines whether the owner is going to sell the vehicle. When the control unit 13 determines that the owner is not going to sell the first vehicle, the process ends, and the control unit 13 waits for the subsequent viewing of the vehicle logs. On the other hand, when the control unit 13 receives information regarding buying and selling of the vehicle, that is, when the control unit 13 determines that the owner is going to sell the first vehicle, the routine proceeds to step S106.

Step S106: The control unit 13 confirms a prospective purchaser of the first vehicle, and generates and sends the second signal prompting to consent to disclosure of the vehicle information of the first vehicle. Specifically, the control unit 13 confirms the prospective purchaser of the first vehicle early, and sends, to the management terminal device 30 (and the system administrator), a signal instructing to obtain consent to disclosure of the vehicle information of the first vehicle from the prospective purchaser. The control unit 13 may also send to the terminal device 20 of the owner a request signal (message etc.) prompting the new owner to consent to disclosure of the vehicle information of the first vehicle. After that, the process ends.

Step S107: The control unit 13 determines whether the user who has viewed the vehicle log of the first vehicle is a general consumer user who is not the owner of the first vehicle. When a general consumer user who is not the owner of the vehicle has viewed the vehicle information of the vehicle, the routine proceeds to step S 108. Otherwise, the routine proceeds to step Sill.

Step S108: The control unit 13 sends the first signal for collecting information on buying and selling of the first vehicle in the secondary distribution to the terminal device 20 used to view the vehicle information of the first vehicle (in this example, the terminal device 20 of the general consumer different from the owner of the first vehicle) and/or the management terminal device 30. Specifically, the control unit 13 sends a signal (message, etc.) asking "whether the owner of the first vehicle has been changed (whether vehicle has been sold)" to the terminal device 20 used to view the vehicle information of the first vehicle. The control unit 13 also sends to the management terminal device 30 a signal telling that a general user other than the owner of the first vehicle has viewed the vehicle information of the first vehicle. This signal serves as a trigger for the system administrator to collect information on whether the vehicle has been sold (whether the owner has been changed). The control unit 13 may further send a signal (message etc.) for confirming the current owner of the first vehicle to the communication device 40 of the first vehicle.

Step S109: The control unit 13 then waits for a response to be input from the viewer's terminal device 20 or waits to receive information on buying and selling of the first vehicle from the management terminal device 30, and determines whether the first vehicle has been sold (whether the owner has been changed). When the control unit 13 determines that the first vehicle has not been sold, the process ends, and the control unit 13 waits for the subsequent viewing of the vehicle logs. On the other hand, when the control unit 13 receives information on buying and selling of the first vehicle in the secondary distribution, that is, when the control unit 13 determines that the first vehicle has been sold, the routine proceeds to step S110.

Step S110: The control unit 13 confirms the current owner (new owner) of the first vehicle, and generates and sends the second signal prompting to consent to disclosure of the vehicle information of the first vehicle. Specifically, the control unit 13 confirms the current owner of the first vehicle early, and sends, to the management terminal device 30 (and the system administrator), a signal instructing to obtain consent to disclosure of the vehicle information of the first vehicle from the current owner. Since it is also very likely that the viewer of the vehicle information is the current owner (new owner), the control unit 13 also sends to the terminal device 20 of the viewer a signal (message etc.) prompting the current owner to consent to disclosure of the vehicle information of the first vehicle. The control unit 13 may also send to the communication device 40 of the first vehicle a signal (message etc.) prompting the current owner to consent to disclosure of the vehicle information of the first vehicle. After that, the process ends.

Step Sill: The control unit 13 determines whether the user who has viewed the vehicle log of the first vehicle is a used vehicle dealer user. The used vehicle dealer user herein refers to a used vehicle dealer who has a contract to use the system 1, and includes a car auctioneer and so on. When the used vehicle dealer user has viewed the vehicle information of the first vehicle, the routine proceeds to step S112. Otherwise, the routine proceeds to step S115.

Step S112: The control unit 13 sends the first signal for collecting information on buying and selling of the first vehicle in the secondary distribution to the terminal device 20 used to view the vehicle information of the first vehicle (in this example, the terminal device 20 of the used vehicle dealer) and/or the management terminal device 30. Specifically, the control unit 13 sends a signal (message, etc.) asking "whether the owner of the first vehicle has been changed (vehicle has been sold)" to the terminal device 20 of the used vehicle dealer. The control unit 13 also sends to the management terminal device 30 a signal telling that the used vehicle dealer has viewed the vehicle information of the first vehicle. This signal serves as a trigger for the system administrator to collect information on whether the vehicle has been sold (whether the owner has been changed). The control unit 13 may further send a signal (message etc.) confirming the current owner of the first vehicle to the communication device 40 of the first vehicle.

Step S113: The control unit 13 then waits for a response to be input from the terminal device 20 of the used vehicle dealer or waits to receive information on buying and selling of the first vehicle in the secondary distribution from the management terminal device 30, and determines whether the first vehicle has been sold (whether the owner has been changed). When the control unit 13 determines that the first vehicle has not been sold, the process ends, and the control unit 13 waits for the subsequent viewing of the vehicle logs. On the other hand, when the control unit 13 receives information on buying and selling of the first vehicle in the secondary distribution, that is, when the control unit 13 determines that the first vehicle has been sold, the routine proceeds to step S114.

Step S114: The control unit 13 confirms the current owner (new owner) of the first vehicle, and generates and sends the second signal prompting to consent to disclosure of the vehicle information of the first vehicle. Specifically, the control unit 13 confirms the current owner of the first vehicle early, and sends, to the management terminal device 30 (and the system administrator), a signal instructing to obtain consent to disclosure of the vehicle information of the first vehicle from the current owner. The control unit 13 may also send to the terminal device 20 of the used vehicle dealer a request signal (message etc.) prompting the current owner to consent to disclosure of the vehicle information of the first vehicle. The control unit 13 may also send to the communication device 40 of the first vehicle a signal (message etc.) prompting the current owner to consent to disclosure of the vehicle information of the first vehicle. After that, the process ends.

Step S115: The control unit 13 determines whether the terminal used to view the vehicle log of the first vehicle is the management terminal device 30 of the system management department (including an affiliated dealership that sold the vehicle). The system management department usually views the vehicle information as a part of regular service and has nothing to do with buying and selling of the vehicle. Therefore, when the control unit 13 determines that the terminal used to view the vehicle log of the first vehicle is the management terminal device 30, the process ends. When an affiliated dealership buys or sells a vehicle, data regarding the change of owner is promptly entered, and consent to disclosure of the vehicle information is also promptly obtained from the new owner. Accordingly, the system does not need to send a signal for collecting information. When the terminal used to view the vehicle log of the first vehicle is not the management terminal device 30, the routine proceeds to step S116.

Step S116: Step S116 is a process that is performed when NO in all of steps S103, S107, Sill, and S115. For example, step S116 is a process that is performed when a general consumer user has viewed vehicle information of a vehicle in a used vehicle market where there is no individual owner. The control unit 13 sends a signal telling that the vehicle information has been viewed (sends the first signal for collecting information on buying and selling of the vehicle in the secondary distribution) to the management terminal device 30 (and the system administrator). This signal serves as a trigger to confirm early whether the viewed vehicle has been sold and confirm owner information early. When the vehicle has been sold, the control unit 13 sends the second signal instructing to obtain consent to disclosure of the vehicle information from the new owner. After that, the process ends.

As described above, when the information processing device 10 according to the present embodiment detects viewing of the vehicle log (vehicle information), the information processing device 10 estimates that the vehicle is going to be bought or sold or has been bought or sold, and sends to at least one of the terminal device 20 used to view the vehicle log and the management terminal device 30 the first signal for collecting information on buying and selling of the vehicle in the secondary distribution. When the information processing device 10 receives information on buying and selling of the vehicle in the secondary distribution, the information processing device 10 sends to the management terminal device 30 etc. the second signal instructing to obtain consent to disclosure of the vehicle information from the current owner (new owner) of the vehicle.

When sale of the vehicle is detected, the control unit 13 does not disclose the vehicle information of the vehicle acquired after the sale of the vehicle. When the control unit 13 obtains consent to disclosure of the vehicle information from the new owner of the vehicle, the control unit 13 discloses the vehicle information acquired after the sale of the vehicle.

In the present disclosure, information on viewing of the vehicle log (vehicle information) is used as means for detecting that a vehicle is going to be bought or sold or has been bought or sold. According to such a configuration, the sale or purchase of the vehicle in the secondary distribution can be confirmed early, and consent to disclosure of the vehicle information can be promptly obtained from the new owner. This minimizes the period without vehicle owner's consent to disclosure of the vehicle information. For a vehicle that has been bought or sold, disclosure of vehicle information can be stopped until consent is obtained from the new owner. This prevents inappropriate disclosure of vehicle information. The technology related to use and management of vehicle logs is thus improved in that vehicle information can be appropriately disclosed.

Although the present disclosure is described above based on the drawings and the embodiment, it should be noted that one skilled in the art can make various modifications and alterations thereto based on the present disclosure. These modifications and alterations fall within the scope of the present disclosure. For example, the functions etc. included in the configurations, steps, etc. can be rearranged so as not to be logically inconsistent, and a plurality of configurations, steps, etc. can be combined into one configuration, step, etc., or can be divided.

For example, in the above embodiment, the configuration and operation of the information processing device 10 may be distributed between or among a plurality of computers capable of communicating with each other. An embodiment is possible in which, for example, a part of the components of the information processing device 10 is provided in the management terminal device 30.

An embodiment is also possible in which, for example, a general-purpose computer functions as the information processing device 10 according to the above embodiment. Specifically, a program describing processing details for implementing each function of the information processing device 10 according to the above embodiment is stored in a memory of the general-purpose computer, and the program is read and executed by the processor. Therefore, the present disclosure can also be implemented as a program that can be executed by the processor or a non-transitory computer-readable medium that stores the program.

## Claims

1. An information processing system (1) comprising an information processing device (10) that records vehicle information of each individual vehicle, the information processing device (10) including a controller (13) configured to send a first signal for collecting information on buying and selling of a first vehicle in secondary distribution, when the controller (13) detects viewing of vehicle information of the first vehicle.

2. The information processing system (1) according to claim 1, wherein the controller (13) is configured to send a second signal prompting to consent to disclosure of the vehicle information of the first vehicle, when the controller (13) receives the information on buying and selling of the first vehicle in the secondary distribution.

3. The information processing system (1) according to claim 1, wherein:
the controller (13) is configured to, when a terminal (20) configured to display the vehicle information of the first vehicle is a terminal device (20) of an owner of the first vehicle, send a signal as the first signal to at least one of the terminal device (20) of the owner of the first vehicle and a management terminal device (30);
the signal is a signal asking whether the first vehicle is going to be sold; and
the management terminal device (30) is configured to manage the vehicle information.

4. The information processing system (1) according to claim 3, wherein the controller (13) is configured to: when the controller (13) receives information indicating that the first vehicle is going to be sold,
confirm a prospective purchaser of the first vehicle; and
send, to the management terminal device (30), a second signal instructing to obtain consent to disclosure of the vehicle information of the first vehicle from the prospective purchaser.

5. The information processing system (1) according to claim 1, wherein:
the controller (13) is configured to, when a terminal (20) configured to display the vehicle information of the first vehicle is a terminal device (20) of a general consumer other than an owner of the first vehicle or a terminal device (20) of a used vehicle dealer, send a signal as the first signal to at least one of the terminal device (20) and a management terminal device (30);
the signal is a signal asking whether the first vehicle is going to be sold;
the terminal device (20) is configured to display the vehicle information; and
the management terminal device (30) is configured to manage the vehicle information.

6. The information processing system (1) according to claim 5, wherein when the controller (13) receives information indicating that the first vehicle has been sold, the controller (13) is configured to
confirm a current owner of the first vehicle; and
send, to the management terminal device (30), a second signal instructing to obtain consent to disclosure of the vehicle information of the first vehicle from the current owner, or send, to the terminal device (20), a second signal prompting to consent to disclosure of the vehicle information of the first vehicle.

7. The information processing system (1) according to claim 1, wherein the controller (13) is configured to send a signal confirming a current owner of the first vehicle to a communication device (40) of the first vehicle.

8. The information processing system (1) according to claim 2, wherein the controller (13) is configured to send, to a communication device (40) of the first vehicle, a signal prompting to consent to disclosure of the vehicle information on the first vehicle.

9. The information processing system (1) according to any one of claims 1 to 8, wherein the controller (13) is configured not to disclose the vehicle information of the first vehicle acquired at or after sale of the first vehicle when the controller (13) receives information indicating that the first vehicle has been sold.

10. The information processing system (1) according to claim 1, further comprising:
a terminal device (20) configured to view the vehicle information; and
a management terminal device (30) configured to manage the vehicle information, wherein
the controller (13) is configured to send the first signal to at least one of the terminal device (20) and the management terminal device (30) when the terminal device (20) views the vehicle information of the first vehicle in the information processing device (10), and
the first signal is a signal for collecting the information on buying and selling of the first vehicle in the secondary distribution.

11. The information processing system (1) according to claim 10, wherein:
the controller (13) is configured to send a second signal to at least one of the terminal device (20) and the management terminal device (30) when the information on buying and selling of the first vehicle in the secondary distribution is sent from the terminal device (20) or the management terminal device (30); and
the second signal is a signal prompting to consent to disclosure of the vehicle information of the first vehicle.

12. The information processing system (1) according to claim 10, wherein:
the controller (13) is configured to, when the terminal device (20) is a terminal device (20) of an owner of the first vehicle, send a signal as the first signal to at least one of the terminal device (20) and the management terminal device (30); and
the signal is a signal asking whether the first vehicle is going to be sold.

13. The information processing system (1) according to claim 12, wherein when information indicating that the first vehicle is going to be sold is sent from the terminal device (20) or the management terminal device (30), the controller (13) is configured to:
confirm a prospective purchaser of the first vehicle early; and
send a second signal to the management terminal device (30), the second signal instructing to obtain consent to disclosure of the vehicle information of the first vehicle from the prospective purchaser.

14. The information processing system (1) according to claim 10, wherein:
the controller (13) is configured to send a signal as the first signal to at least one of the terminal device (20) and the management terminal device (30) when the terminal device (20) is a terminal device (20) of a general consumer other than an owner of the first vehicle or a terminal device (20) of a used vehicle dealer; and
the signal is a signal asking whether the first vehicle has been sold.

15. The information processing system (1) according to claim 14, wherein when information indicating that the first vehicle has been sold is sent from the terminal device (20) or the management terminal device (30), the controller (13) is configured to:
confirm a current owner of the first vehicle early; and
send to the management terminal device (30) a second signal instructing to obtain consent to disclosure of the vehicle information of the first vehicle from the current owner, or send to the terminal device (20) a second signal prompting the current owner to consent to disclosure of the vehicle information of the first vehicle.

16. The information processing system (1) according to claim 10, wherein the controller (13) is configured to send a signal confirming a current owner of the first vehicle to a communication device (40) of the first vehicle.

17. The information processing system (1) according to any one of claims 10 to 16, wherein the controller (13) is configured not to disclose the vehicle information of the first vehicle acquired at or after sale of the first vehicle when the controller (13) receives information indicating that the first vehicle has been sold.

18. An information processing method for providing vehicle information, the information processing method comprising:
receiving a request to view vehicle information of a first vehicle;
sending the vehicle information of the first vehicle; and
sending a first signal for collecting information on buying and selling of the first vehicle in secondary distribution.

19. The information processing method according to claim 18, further comprising sending a second signal prompting to consent to disclosure of the vehicle information of the first vehicle, when the information on buying and selling of the first vehicle in the secondary distribution is received.

20. The information processing method according to claim 18 or 19, further comprising stopping disclosure of the vehicle information of the first vehicle acquired at or after sale of the first vehicle, when information indicating that the first vehicle has been sold is received.
